(19) Europäisches Patentamt
European Patent Office
Office européen des brevets

(11) Veröffentlichungsnummer: **0 188 690**
**B1**

(12) # EUROPÄISCHE PATENTSCHRIFT

(45) Veröffentlichungstag der Patentschrift: **27.12.90**

(51) Int. Cl.$^5$: **C 08 F 291/02,** C 08 L 77/00

(21) Anmeldenummer: **85114624.1**

(22) Anmeldetag: **18.11.85**

(54) **Neue Pfropfpolymerisate und deren Abmischungen mit Polyamiden.**

(30) Priorität: **28.11.84 DE 3443343**

(43) Veröffentlichungstag der Anmeldung:
**30.07.86 Patentblatt 86/31**

(45) Bekanntmachung des Hinweises auf die Patenterteilung:
**27.12.90 Patentblatt 90/52**

(84) Benannte Vertragsstaaten:
**BE CH DE FR GB IT LI NL**

(56) Entgegenhaltungen:
**EP-A-0 001 245**

**CHEMICAL ABSTRACTS, Band 99, Nr. 8, 22. August 1983, Seite 309, Zusammenfassung Nr. 58849u, Columbus, Ohio, US; S. ROESINGER et al.: "Development of materials with blood compatibility by radiation processing"**

(73) Patentinhaber: **BAYER AG**
**D-5090 Leverkusen 1 Bayerwerk (DE)**

(72) Erfinder: **Lindner, Christian, Dr.**
**Riehlerstrasse 200**
**D-5000 Köln 60 (DE)**
Erfinder: **Trabert, Ludwig, Dr.**
**Leydelstrasse 67**
**D-4150 Krefeld (DE)**
Erfinder: **Bartl, Herbert, Dr.**
**Eichendorffweg 10**
**D-5068 Odenthal (DE)**
Erfinder: **Ott, Karl Heinz, Dr.**
**Paul-Klee-Strasse 54**
**D-5090 Leverkusen (DE)**

**EP 0 188 690 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft neue Pfropfpolymerisate auf der Basis von Elastomeren als Pfropfgrundlage und aufgepfropften Vinylmonomeren, deren Herstellung und Abmischung mit speziellen thermoplastischen Kunsstoffen.

In den Chemical Abstracts, *99*, Nr 8, 22.8.1983, S.309. Nr. 58 849u werden blutverträgliche strahlungs-gepfropfte Polymere unter Verwendung von N-Vinyl-N-methylacetamid als Pfropfmonomer beschrieben. Pfropfgrundlagen, die verbesserte Blutverträglichkeit nach Pfropfung ergaben, sind Niederdruck-Polyethylen, chloriertes Polyethylen, Ethylen/Tetrafluorethylen-Copolymere, Ethylen/Vinylacetate-Copolymere, Polypropylen, Polytetrafluorethylen und Silikone.

Die neuen Pfropfcopolymerisate mit einer Teilchengröße ($d_{50}$) bon 0,05 bis 8 µm, sind hergestellt aus

1. einer Elastomerkomponente mit Glasübergangstemperaturen $< 0°C$, insbesondere $< -20°C$, als Pfropfgrundlage und

2. Pfropfmonomeren der allgemeinen Formel I

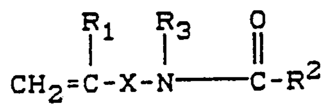

(I)

in der

$R_1$ für H oder einen $C_1$—$C_4$-Alkylrest, vorzugsweise H oder —$CH_3$,
$R_3$ für H, einen Phenyl- oder $C_1$—$C_8$-Alkylrest
$R_2$ für H oder einen $C_1$—$C_{10}$-Alkyl-, $C_{6-12}$-Aryl-, —$OR_4$-Rest, insbesondere einen —$PR^4$-Rest mit
$R_4$ = ein $C_1$—$C_8$-Alkyl- oder $C_6$—$C_{12}$-Arylrest, der gegebenenfalls mit Alkylgruppen oder O- bzw. N-haltigen Gruppen substituiert sein kann,
X für eine Einfachbindung oder einen $C_1$—$C_{10}$-Alkylen-, $C_6$—$C_{12}$-Arylenrest oder für

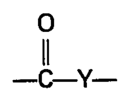 mit

Y = —O—Z, —NH—Z—, wobei
Z = einen $C_1$—$C_{10}$-Alkylen- oder $C_6$—$C_{12}$-Arylenrest bedeutet,
wobei jedoch N-Vinyl-N-methylacetamid als Pfropfmonomers ausgenommen ist,
und gegebenenfalls weiteren, olefinisch ungesättigten Monomeren.

Besonders geeignete Pfropfmonomere der allgemeinen Formel (I) sind N-Vinylacetamide, N-Vinylmethylurethan, N-Vinylphenylurethan,

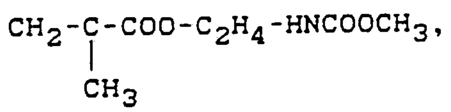 Vinylformamid,

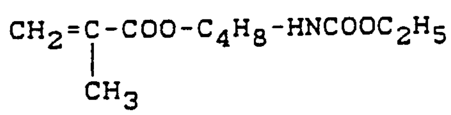

Besonders bevorzugte Verbindungen (I) sind solche, die im Molekül eine Urethangruppe aufweisen und der allgemeinen Formel (II) entsprechen

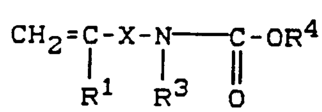

(II)

wie z.B. in der $R^1$, $R^3$ und $R_4$ die oben angegebene Bedeutung haben, N-Vinylurethane oder Monomere der allgemeinen Formel (III)

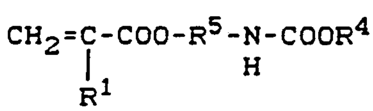

(III)

in der

$R^1$ und $R^4$ die oben angegebene Bedeutung haben und
$R^5$ für einen $C_1$—$C_{10}$-Alkylenrest steht.

Bevorzugte Pfropfpolymerisate werden aus
8—85 Gew.-%, vorzugsweise 50—75 Gew.-% Pfropfgrundlage und aus

92—15 Gew.-% vorzugsweise 50—25 Gew.-% aufzupfropfenden Monomeren hergstellt, die sich aus 0,1—100 Gew.-%, vorzugsweise 0,5—20 Gew.-% Monomeren der allgemeinen Formel (I) und 0—99,9 Gew.-%, vorzugsweise 99,5—80 Gew.-% weiteren olediuisch ungesättigten Monomeren zusammensetzen können.

Die zur Pfropfcopolymerisation in Mischung mit wenigstens einem Monomeren (I) gegebenenfalls einsetzbaren olefinisch einfach ungesättigten Monomeren sind solche, die radikalisch polymerisierbar und zur Copolymerisation mit den Monomeren der Formel (I) fähig sind. Bevorzugt werden Vinyl- oder Vinylidenmonomere, besonders bevorzugt Monomere aus der Klasse der Styrole, wie Styrol, α-Methylstyrol, p-Methylstyrolester, Halogenstyrole, der α, β-ungesättigten Nitrile, wie Acrylnitril oder Methacrylnitril, der Acrylate, wie Acrylsäurealkylester mit bis zu 12 C-Atomen in der Estergruppe sowie auch die entsprechenden Methacrylate, Methacrylsäure, Acrylsäure, Acrylamid, Methacrylamid, Vinylacetat, Vinylpropionat, α-Olefine wie Ethylen, Propylen, Butadien, Chloropren, Vinylchlorid sowie auch Maleinsäurederivate wie Maleinsäureanhydrid.

Die in den erfindungsgemäßen Pfropfcopolymerisaten vorliegenden Elastomerkomponenten sind Elastomere mit Glasübergangstemperaturen kleiner 0°C, insbesondere kleiner −20°C, wie z.B. Elastomere aus der Reihe der Dienkautschuke (insbesondere Polybutadien, Polychloropren, Polyisopren), der Olefinkautschuke (wie z.B. Ethylenpolymere, Ethylen-Vinylacetatcopolymere, Ethylen-Acrylat-Copolymere, EPDM-Kautschuke), der Silikonkautschuke oder Acrylatkautschuke, vorzugsweise Homo- oder Copolymere von Acrylsäurealkylestern mit bis zu 12 C-Atomen in der Estergruppe, die zur möglichen Vernetzung mit polyfunktionellen ungesättigten Monomeren copolymerisiert werden können. Bevorzugte Kautschukkomponenten sind Polybutadiene sowie deren Copolymere mit Styrol oder Acrylnitril, sowie Acrylatkautschuke. Die Elastomeren können unvernetzt, teilvernetzt oder hochvernetzt vorliegen. Besonders bevorzugt sind wenigstens bis zu 50% teilvernetzte Elastomere.

Besonders bevorzugt sind Elastomere, die eine durchschnittliche Teilchengröße von 0,05—8 µm ($d_{50}$-Wert), vorzugsweise von 0,08—1 µm aufweisen (bestimmt mit Hilfe der Ultrazentrifuge).

Insbesondere geeignete Kautschuke sind Polybutadiene oder deren Copolymerisate mit Teilchengrößen von 0,09—0,6 µm und Gelgehalten größer 50 Gew.-% sowie Alkylacrylatkautschuke mit Teilchengrößen von 0,09—0,06 µm und Gelgehalten größer 20 Gew.-%, insbesondere größer 80 Gew.-%; letztere sind dann besonders vorteilhaft, wenn sie eine sogenannte Kern-Mantel-Struktur aufweisen, d.h. sie enthalten einen Kern aus acrylatkautschukfremdem Polymerisat. Dieser Kern ist von einer Hülle aus vernetztem Alkylacrylatkautschuk umgeben, auf die dann Monomere (I), gegebenenfalls in Kombination mit anderen Monomeren, aufgepfropft werden.

Die erfindungsgemäßen Pfropfcopolymerisate besitzen eine teilchenförmige Gestalt mit einer Teilchengröße ($d_{50}$) von 0,05—8 µm, bevorzugt sind sie wenigstens partiell vernetzt und leiten sich von Dien- oder Alkylacrylatkautschuken ab.

Die erfindungsgemäßen Pfropfpolymeriste werden hergestellt, indem wenigstens ein Monomer (I) gegebenenfalls in Kombination mit anderen ethylenisch ungesättigten Monomeren, radikallisch in Gegenwart eines Elastomeren pfropfcopolymerisiert wird.

Bei diesem Verfahren können zur Pfropfcopolymerisation unvernetzte oder wenigstens partiell vernetzte Kautschuke eingesetzt werden; wenn man unvernetzte Kautschuke einsetzt, so kann die Pfropfcopolymerisation so durchgeführt werden, daß während der Pfropfung auch eine Vernetzung der Kautschuke in gewünschtem Maß stattfinde. Die Pfropfung kann bei Temperaturen von 20°C bis 170°C, vorzugsweise von 50°C bis 100°C durchgeführt werden. Das Verfahren läßt sich in Masse, in Lösung, in Dispersion oder Suspension durchführen. Bevorzugt ist die Dispersions-, Fällungs- und Suspensionspolymerisation; ein besonders bevorzugtes Verfahren stellt die Emulsionspolymerisation dar. Die Polymerisationsverfahren lassen sich in organischen Medien oder in wäßrigen Medien durchführen. Wird die bevorzugte Emulsionspolymerisation zur Herstellung der erfindungsgemäßen Pfropfcopolymerisate durchgeführt, so arbeitet man vorteilhaft unter Vorlage einer Emulsion eines Kautschuks, dessen Emulsionsteilchengröße im Sinne der Erfindung liegt, andererseits können auch die Kautschukteilchen vor oder nach der Pfropfcopolymerisation durch bekannte Agglomeristionsverfahren zu einer gewünschten Teilchengröße vergrößert werden.

Die Pfropfung wird radikalisch durchgeführt; das kann durch die Mitverwendung von radikalerzeugenden Initiatoren wie Peroxiden, Azoverbindungen, Hydroperoxiden oder Perestern durchgeführt werden. Weiterhin lassen sich sogenannte Regler mitverwenden wie z.B. Mercaptane Bei der Dispersion- oder Suspensionspolymerisation werden üblicherweise Hilfsstoffe wie bekannte Dispergier-, Suspendiermittel oder Emulgatoren verwendet. Arbeitet man bei der Pfropfung in Medien, so sollte bei pH-Werten von 12—2 pfropfcopolymerisiert werden.

Die Polymerisationsverfahren können batchweise, semikontinuierlich oder vollkontinuierlich durchgeführt werden. Dabei werden die Monomeren (I), gegebenenfalls in Mischung mit anderen Monomeren, radikalisch in Gegenwart der elstomeren Pfropfgrundlage pfropfcopolymerisiert. Dabei wird wenigstens ein Teil der Monomeren auf das Elastomer gepfropft. Diese Pfropfung ist mengenmäßig in weiten Bereichen variierbar. Das Ausmaß der Pfropfung läßt sich feststellen durch die Pfropfausbeute oder den Pfropfgrad. Unter den erfindungsgemäßen Pfropfpolymerisaten werden daher Produkte verstanden, die Pfropfcopolymere und Humo- und Copolymerisate der aufzupfropfenden Monomeren enthalten.

Nach der Pfropfpolymerisation lassen sich die Polymerisate nach herkömmlichen Verfahren

aufarbeiten, wie z.B. durch Filtration, Koagulation und Filtration, Sprühtrocknung, Ausdampfprozesse. Insbesonders geeignet ist eine Aufarbeitung bei pH-Werten von kleiner als 7. Eine derartige Aufarbeitungskontrolle erübrigt sich, wenn bereits die Pfropfung bei pH-Werten kleiner 7 durchgeführt wurde. Wurde die Polymerisation im alkalischen Milieu durchgeführt, so sollte vorzugsweise während der Aufarbeitung auf einen pH-Wert von kleiner 7, vorzugsweise 4—6, eingestellt werden. Vor weiterer Verarbeitung können den Pfropfpolymerisaten Füllstoffe, Stabilisatoren, Weichmacher, Pigmente, Antioxidanzien zugeführt werden, je nachdem für welche technische Anwendung die Polymerisate vorgesehen sind.

Ein weiterer Gegenstand der Erfindung sind Polyamid-Thermoplastformassen, die die erfindungsgemäßen Pfropfopolymerisate enthalten.

Solche Formmassen zeichnen sich — abhängig von Modifikatorgehalt — dadurch aus, daß sie ihr Zähbruchverhalten bis −40°C beibehalten und somit ein Rückgang der Zähigkeitseigenschaften erst unterhalb dieser Temperatur eintritt. Außerdem zeichnen sich die modifizierten Polyamidformmassen durch ein sehr gutes Fließverhalten in der Schmelze aus.

Die erfindungsgemäßen thermoplastischen Polyamidformmassen bestehen vorzugsweise aus

A. 65—97, vorzugsweise 70—95, besonders bevorzugt aus 75—80 Gew.-%, bezogen auf die Komponenten A und B, eines Polyamids und aus

B. 3—35, vorzugsweise 5—30, besonders bevorzugt 20—25 Gew.-% eines vorgehend beschriebenen, erfindungsgemäßen, teilchenförmigen Pfropfcopolymerisates und

C. weiteren Füll-, Verstärkungs- und Hilfsstoffen.

Als Polyamide A eignen sich alle thermoplastischen Polyamide, vorzugsweise teilkristalline Polyamide. So können als teilkristalline Polyamide für die erfindungsgemäßen Formmassen Polyamid 6, Polyamid 66 oder deren Copolyamide eingesetzt werden. Weiterhin kommen teilkristaline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, der Diaminkomponente ganz oder teilweise aus m- und/oder p-Xylylendiamin und/oder Hexamethylendiamin und/oder 2,2,4-Trimethylenhexamethylendiamin und/oder 2,4,4-Trimethylhexmethylendiamin und/oder Isophorondiamin besteht.

Außerdem sind Polyamide geeignet, die teilweise aus Lactamen mit 6—12 C-Atomen und unter Mitverwendung einer oder mehrerer der obengenannten Ausgangskomponenten hergestellt worden sind.

Besonders bevorzugte teilkristalline Polyamide sind Poyamid 6 und Polyamid 66.

Die thermoplastischen Polyamide sollen vorzugsweise eine relative Viskosität (gemessen an einer 1 Gew.-%igen Lösung in m-Kresol bei 25°C) von 2,0—5,0, bevorzugt von 2,5—4,0 aufweisen.

Die erfindungsgemäßen Polyamidformmassen können übliche Additive, wie Gleit- und Entformungsmittel, Nukleierungsmittel, Stabilisatoren, Füll- und Verstärkungsstoffe, Flammschutzmittel sowie Farbstoffe enthalten.

Die gefüllten bzw. verstärkten Formmassen können bis zu 60 Gew.-%, bezogen auf die verstärkten Formmassen, Füll- und/oder Verstärkungsstoffe, enthalten. Bevorzugte Verstärkungsstoffe sind Glasfasern. Bevorzugte Füllstoffe, die auch verstärkend wirken können, sind Glaskugeln Glimmer, Silikate, Feldspat, Quarz, Talkum, Titandioxid, Wollastonit.

Die mit Flammschutzmitteln ausgerüsteten Formmassen können diese Additive in einer Konzentration von im allgemeinen weniger als 30 Gew.-% bezogen auf die flammgeschützten Formmassen enthalten und eine ausreichende Flammfestigkeit aufweisen.

Es kommen alle bekannten Flammschutzmittel in Frage, wie z.B. Melamin und dessen Salze, wie Melamincyanurat oder Melaminusulfat oder roter Phosphor.

Die Herstellung dr Formmassen können in üblichen Mischaggregaten, wie Walzen, Knetern, Ein- und Mehrwellenextrudern, erforlgen.

Wenn auch in den meisten Fällen sämtliche Komponenten zweckmäßigerweise in einem Schritt gemischt werden, so kann es für manche Verfahrensabläufe empfehlenswert sein, die Kopmponenten erst nacheinander zu mischen.

So können die erfindungsgemäßen Formmassen auf den genannten Mischaggregaten hergestellt werden, indem die beiden Komponenten A und B gemeinsam aufgeschmolzen und homogenisiert werden oder indem das Pfropfpolymerisat B in die Schmelze des Polyamids eingearbeiet wird.

Die Temperatur bei der Herstellung der Mischungen sollte mindestens 10°C und zweckmäßig höchstens 80°C oberhalb des Schmelzpunktes des Polyamides liegen.

Die erfindungsgemäßen Formmassen zeichnen sich durch eine ausgezeichnete Zähigkeit und ein sehr gutes Fließverhalten aus.

Vor allem wegen dieser Eigenschaften eignen sich die erfindungsgemäßen Formmassen zur Herstellung von Spritzguß- und Extrusionsformkörpern, vor allem im Kfz-Bereich für Stoßfänger, Karosserieteile.

## Beispiele

A. Verwendete Komponenten/Erfindungsgemäße Pfropfpolymerisate

I. Polyamid-6 mit einer relativen Viskosität (gemessen an einer 1 Gew.-%igen Lösung in m-Kresol bei 25°C) von 3,0

II. Polyamid-66 mit einer relativen Viskosität von 3,0, gemessen wie I.

III. Polyamid aus Isophthalsäure und Hexamethylendiamin ($\eta_{rel}$) 2,68 gemessen wie bei I)

IV. Pfropfcopolymerisate

IV.1 Pfropfgrundlagen

IV.1.1 Polybutadien mit einer mittleren Teilchengröße von 0,4 µm ($d_{50}$-Wert) und einem Gelgehalt von 87 Gew.-% in Form einer wäßrigen Emulsion mit einem Polymerfeststoffgehalt von 49 Gew.-%.

IV.1.2 Polybutylacrylat mit einer mittleren Teilchengröße von 0,45 µm ($D_{50}$-Wert) und einem Gelgehalt von 85 Gew.-% (der Gelgehalt wurde durch Copolymerisation mit Triallylcyanurat als vernetzendes Comonomer eingestellt). Der Kautschuk lieft in Form einer wäßrigen Emulsion mit einem Polymerfeststoffgehalt von 37 Gew.-% vor.

IV.1.3 Ethylen-Vinylacetat-Copolymer mit einem Vinylacetatgehalt von 30 Gew.-%, das Polymer it löslich in org, Flüssigkeiten und besitzt keinen Gelgehalt. Das Polymer liegt in Form in einer wäßrigen Emulsion vor; die Emulsion besitzt einen Feststoffgehalt von 37 Gew.-%.

IV.2 Monomere zur Pfropfung

Als Monomere werden folgende Verbindungen eingesetzt:

N-Vinyl-methylurethan (A)

N-Vinyl-acetamid (B)

\- -

$CH_2=C-COO-CH_2-CH_2-NH-COOCH_3$ (D)
|
$CH_3$

Beispiel 1—10

In einem Reaktor werden 2416 Gew.-Teile des Kautschuklatex IV.1.1 und 850 Gew.-Teile Wasser vorgelegt. Nach Aufheizen auf 65°C wird die Polymerisation durch Zusatz von 3,4 Gew.-Teilen Kaliumperoxidisulfat, gelöst in 100 Gew.-Teilen Wasser, gestartet.

Im Anschluß daran werden folgende Mengenströme innerhalb von 4 Stunden bei 65°C gleichmäßig in den Reaktor eindosiert.

Monomere: 300 Gew.-Teile

Emulgator: 410 Gew.-Teile Wasser
22 Gew.-Teile N-Salz der disproportionierten Abietinsäure
22 Gew.-Teile 1n-Natronlauge

Tabelle 1: Pfropfpolymerisate

| Beispiele | Gew.-Teile Monomeres |
|---|---|
| IV.1 | 300 Methylmethacrylat (Vergleich) |
| IV.2 | 293 Methylmethacrylat, 7 A |
| IV.3 | 293 Methylmethacrylat, 7 B |
| IV.5 | 293 Methylmethacrylat, 7 D |
| IV.6 | 216 Styrol<br>84 Acrylnitril (Vergleich) |
| IV.7 | 211 Styrol<br>82 Acrylnitril, 7 A |
| IV.8 | 211 Styrol<br>82 Acrylnitrol, 7 D |
| IV.9 | 291 Methylmethacrylat, 9 A |
| IV.10 | 285 Methylmethacrylat, 15 A |

Nach Zudosierung der in der Tabelle 1 aufgeführten Monomeren wird noch 4 Stunden bei 65°C nachgeheizt. Anschlißend stabilisiert man die Emulsion mit 1,6-Gew.-Teilen, bezogen auf 100 Gew.-Teilen Propfpolymerisat, phenolischen Antioxidantien. Zur Aufarbeitung zu Pulvern werden die Emulsionen mittels $MgSO_4$/ Essigsäure-Mischung bei pH-Werten von 4—5 koaguliert, gewaschen und getrocknet.

Beispiele 11—13

In einem Reaktor werden 5797 Gew.-Teile des Kautschuklatex IV.1.2 und 1000 Gew.-Teile Wasser vorgelegt. Nach Aufheizen auf 70°C wird die Polymerisation durch Zusatz von 4 Gew.-Teilen Kaliumperoxidisulfat, gelöst in 240 Gew.-Teilen Wasser, initiiert. Im Anschluß daran werden folgende Mengenströme innerhalb von 5 Stunden bei 70°C gleichmäßig in den Reaktor eindosiert.

Monomere: 920 Gew.-Teile

Emulgator: 792 Gew.-Teile Wasser

14 Gew.-Teile N-Salz von $C_{16}$—$C_{18}$ Alkylsulfonaten

Tabelle 2: Pfropfpolymerisate

| Beispiele | Gew.-Teile Monomers |
|---|---|
| IV.11 | 920 Methylmethacrylat (Vergleich) |
| IV.12 | 901 Methylmethacrylat, 19 A |
| IV.13 | 893 Methylmethacrylat, 27 B |

Nach Zudosierung der in der Tabelle 2 genannten Monomeren wird noch 4 Stunden bei 70°C nachgeheizt. Anschließend stabilisiert man die Emulsion mit 1-Gew.-Teilen, bezogen auf 100 Gew.-Teile Propfpolymerisat, phenolischer Antioxidantien. Zur Aufarbeitung zu Pulvern werden die Emulsionen mittels $MgSO_4$ bei pH-Werten von 4—5 koaguliert, gewaschen und getrocknet.

Beispiele 14—15

In einem Reaktor werden 5799 Gew.-Teile des Kautschuklatex IV.1.3 und 1000 Gew.-Teile Wasser vorgelegt. Nach Aufheizen auf 80°C wird die Polymerisation durch Zusatz von 4 Gew.-Teilen Azoisobuttersäurenitril und 1 g Lauroylperoxid, gelöst in 10 Gew.-Teilen der Monomerkombinationen nach Tabelle 3, gestartet. Im Anschluß daran wird folgender Mengenstrom innerhalb von 5 Stunden bei 70—80°C gleichmäßig in den Reaktor eindosiert.

Monomere: 920 Gew.-Teile

4 Gew.-Teile Azoisobuttersäurenitril

Tabelle 3: Pfropfpolymerisate

| Beispiele | Gew.-Teile Monomeres |
|---|---|
| IV.14 | 901 Methylmethacrylat, 19 A |
| IV.16 | 600 Styrol<br>280 Acrylnitril 40 B |

Nach Zudosierung wird 6 Std. bei 80°C nachgerührt. Anschließend koaguliert man bei pH-Werten von 7 mit NaCl%$CaCl_2$-Gemisch, filtriert, säubert durch Waschen mit Wasser und trocknet.

Die erfindungsgemäßen Pfropfpolymerisate lassen sich zu den Vergleichsprodukten, besonders gut aus wäßrigen Emulsionen isolieren: bei der Trocknung und Entwässerung durch technische Aggregate weisen sie außerdem ein verbessertes Entwässerungsverhalten auf. Besonders vorteilhaft ist ihr Einsatz in Abmischung mit Thermoplasten wie Polyamiden.

B. Herstellung und Prüfung der Polyamidformmassen

Beispiele 17—30

Auf einen kontinuierlich arbeitenden Doppelwellenextruder wurden die Komponenten aufgeschmolzen und homogenisiert. Die Zylindertemperaturen wurden so gewählt, daß die in der Tabelle 4 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer Spritzgußmaschine ASTM-Stäbe hergestellt. Geprüft wurde die Kerbschlagzähigkeit nach Izod bei verschiedenen Temperaturen und daraus der Spröd/Zäh-Übergang ermittelt. Weiterhin wurde die Fließlänge bestimmt.

Tabelle 4: Zusammensetzung und Eigenschaften der Formmassen

| Beispiele | Komponente Polyamid | Gew.-% | Propfprodukt nach Beispiel | Gew.-% | Spröh/Zäh-Übergang (°C) | Fließspirale (cm) |
|---|---|---|---|---|---|---|
| 18[1)] | I | 75 | IV.1 | 25 | -30 | 25 |
| 19 | I | 75 | IV.2 | 25 | -55 | 33 |
| 20 | I | 75 | IV.3 | 25 | -45 | 30 |
| 22 | I | 75 | IV.5 | 25 | -50 | 32 |
| 23[1)] | II | 70 | IV.1 | 30 | -20 | 35 |
| 24 | II | 70 | IV.5 | 30 | -35 | 38 |
| 25[2)] | III | 80 | IV.6 | 20 | -30 | 26 |
| 26[2)] | III | 80 | IV.7 | 20 | -40 | 28 |
| 27[2)] | III | 80 | IV.8 | 20 | -45 | 28 |
| 28[1)] | I | 80 | IV.11 | 20 | +10 | 35 |
| 29 | I | 80 | IV.12 | 20 | -15 | 38 |
| 30 | I | 80 | IV.13 | 20 | -15 | 38 |

1) Vergleichsbeispiele

2) Die Massetemperatur im Extruder und in der Spritzgußmaschine betrug 245° C. Die übrigen Massetemperaturen betrugen 280° C.

**Patentansprüche**

1. Pfropfcopolymerisate sind mit einer Teilchengröße ($d_{50}$) von 0,05 bis 8 μm, sind hergestellt aus 1) einer Elastomerkompnente mit Glasübergangstemperaturen unter 0°C, als Pfropfgrundlage und 2) Pfropfmonomeren der allgemeinen Formel (I)

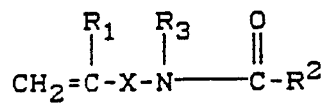
(I)

worin
$R_1$ = für H oder einen $C_1$—$C_4$-Alkylrest,
$R_3$ = für H, einen Phenyl- oder $C_1$—$C_8$-Alkylrest
$R_2$ = für H oder einen $C_1$—$C_{10}$-Alkyl-, $C_{6-12}$-Arylrest, oder , —$OR_4$- mit
$R_4$ = ein $C_1$—$C_8$-Alkyl- oder $C_6$—$C_{12}$-Arylrest, der gegebenenfalls mit Alkyl-, oder O- bzw. N-haltigen Gruppen substituiert sein kann,
X eine Einfachbindung oder einen $C_1$—$C_{10}$-Alkylen-, $C_6$—$C_{12}$-Arylenrest oder

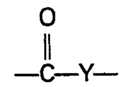 mit

Y = —O—Z—, —NH—Z—, und
Z = einen $C_1$—$C_{10}$-Alkylen- oder $C_6$—$C_{12}$-Arylenrest bedeutet,
wobei jedoch N-Vinyl-N-methylacetamid als Pfropfmonomers ausgeschlossen ist,
und gegebenenfalls weiteren, olefinisch ungesättigten Monomeren.

2. Pfropfpolymerisate nach Anspruch 1, dadurch gekennzeichnet, daß sie aus
8—85 Gew.-%, der Pfropfgrundlage 1, und
92—15 Gew.-% aufzupfropfenden Monomeren, die aus
0,1—100 Gew.-%, aus Monomeren der Formel (I) und
0—99,9 Gew.-%, weiteren olefinisch ungesättigten Monomeren bestehen, hergestellt werden.

3. Pfropfpolymerisate nach Anspruch 1 oder 2, dadurch gekennzeichnet, daß als aufzupfropfende Monomere solche der allgemeinen Formel (II)

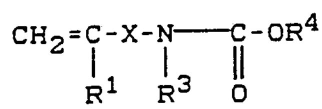
(II)

N-Vinylurethane (Formel II, X = einfache Bindung) oder Monomere der allgemeinen Formel (III)

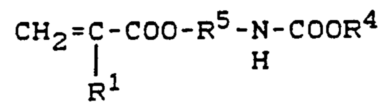
(III)

verwendet werden
wobei $R^1$, $R^3$ und $R^4$ die in Anspruch 1 angegebene Bedeutung haben und
$R^5$ für einen $C_1$—$C_{10}$-Alkylenrest steht.

4. Pfropfpolymerisate nach Ansprüchen 1 bis 3, dadurch gekennzeichnet, daß sie aus 50 bis 75 Gew.-% der Pfropfgrundlage 1, und 25 bis 30 Gew.-% aufzupfropfenden Monomeren hergestellt wurden, die zu 99,5 bis 80 Gew.-% aus weiteren olefinisch ungesättigten Monomeren bestehen können.

5. Pfropfpolymerisate nach Ansprüchen 1 bis 4, dadurch gekennzeichnet, daß als weitere olefinisch ungesättigte Monomere Vinyl- oder Vinylidenmonomere, besonders bevorzugt Styrol, α-Methylstyrol, p-Methylstyrolester, Halogenstyrole, α, β-ungesättigten Nitrile, bevorzugt Acrylnitril oder Methacrylnitril, Acrylsäurealkylester mit bis zu 12 C-Atomen in der Estergruppe sowie auch die entsprechenden Methacrylate, Methacrylsäure, Acrylsäure, Acrylamid, Methacrylamid, Vinylacetat, Vinylpropionat, α-Olefine bevorzugt Ethylen, Propylen, Butadien, Chloropren, Vinylchlorid sowie auch Maleinsäurederivate, bevorzugt Maleinsäureanhydrid eingesetzt werden.

6. Pfropfcopolymerisate nach Ansprüchen 1 bis 5, dadurch gekennzeichnet, daß aös Pfropfgrundlage Dienkautschuke, vorzugsweise Polybutadien, Polychloropren, Polyisopren, Olefinkautschuke, vorzugswesie Ethylenpolymere, Ethylen-Vinylacetatcopolymere, Ethylen-Acrylat-Copolymere, EPDM-Kautschuke, Silikonkautschuke oder Acrylatkautschuke, vorzugsweise Homo- oder Copolymere von Acrylsäurealkylestern mit bis zu 12 C-Atomen in der Estergruppe, die zur möglichen Vernetzung mit polyfunktionellen ungesättigten Monomeren copolymerisiert werden können, eingesetzt werden.

7. Pfropfpolymerisate nach Ansprüchen 1 bis 6, dadurch gekennzeichnet, daß als Pfropfgrundlage Polybutadiene oder Butadiencopolymerisate mit einer Teilchengröße von 0,09—0,6 μm und Gelgehalten >

50 Gew.-% oder Alkylacrylatkautschuke mit Teilchengrößen von 0,09—0,6 µm und Gelgehalten > 20 Gew.-% verwendet werden.

8. Thermoplastische Formmassen enthaltend
A. 65—97 Gew.-% Polyamid und
B. 3—35 Gew.-% eines teilchenförmigen Pfropfpolymerisates nach Ansprüchen 1—7.

9. Thermoplastische Formmassen nach Anspruch 8 enthaltend
A. 70—95 Gew.-% Polyamid und
B. 5—30 Gew.-% teilchenförmige Pfropfpolymerisate nach Ansprüchen 1—7.

10. Thermoplastische Formmassen nach Anspruch 8 enthaltend
A. 75—80 Gew.-% Polyamid und
B. 20—25 Gew.-% eines teilchenförmige Pfropfpolymerisate nach Ansprüchen 1—7.

**Claims**

1. Graft copolymers having a particle size ($d_{50}$) of from 0.05 to 8 µm prepared from
1) an elastomer component having a glass transition temperature below 0°C as the graft base and
2) graft monomers corresponding to general formula (I)

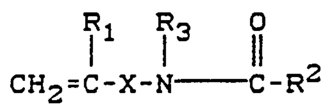
(I)

in which
$R_1$ = H or a $C_{1-4}$ alkyl radical,
$R_3$ = H, a phenyl or $C_{1-8}$ alkyl radical,
$R_2$ = H, a $C_{1-10}$ alkyl or $C_{6-12}$ aryl radical or —$OR_4$— with $R_4$ = a $C_{1-8}$ alkyl or $C_{6-12}$ aryl radical which may optionally be substituted by alkyl or O- or N-containing groups,
X = a single bond or a $C_{1-10}$ alkylene or $C_{6-12}$ arylene radical or

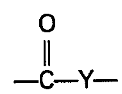

with Y = —O—Z—, —NH—Z— and Z = a $C_{1-10}$ alkylene or $C_{6-12}$ arylene radical, N-vinyl-N-methyl acetamide being excluded as a graft monomer, and optionally other olefinically unsaturated monomers.

2. Graft monomers as claimed in claim 1, characterized in that they are prepared from
8—85% by weight of graft base 1 and
92—15% by weight monomers to be grafted on which consist of
0.1—100% by weight monomers corresponding to formula I and
0—99.9% by weight other olefinically unsaturated monomers.

3. Graft polymers as claimed in claim 1 or 2, characterized in that monomers corresponding to general formula (II)

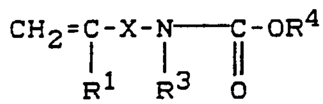
(II)

N-vinyl urethanes (formula II, X = single bond) or monomers corresponding to general formula (III)

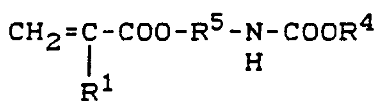
(III)

wherein $R^1$, $R^3$ and $R^4$ are as defined in claim 1 and $R^5$ is a $C_{1-10}$ alkylene radical, are used as the monomers to be grafted on.

4. Graft polymers as claimed in claim 1 to 3, characterized in that they are prepared from 50 to 75% by weight of the graft base 1 and 25 to 30% by weight monomers to be grafted on of which 99.5 to 80% by weight may consist of other olefinically unsaturated monomers.

5. Graft copolymers as claimed in claims 1 to 4, characterized in that vinyl or vinylidene monomers, preferably styrene, α-methyl styrene, p-methyl styrene ester, halostyrenes, α-β-unsaturated nitriles, preferably acrylonitrile or methacrylonitrile, alkyl acrylates containing up to 12 C atoms in the ester group and also the corresponding methacrylates, methacrylic acid, acrylic acid, acrylamide, methacrylamide, vinyl acetate, vinyl propionate, α-olefins, preferably ethylene, propylene, butadiene, chloroprene, vinyl chloride and also maleic derivatives, preferably maleic anhydride, are used as further olefinically unsaturated monomers.

6. Graft copolymers as claimed in claims 1 to 5, characterized in that diene rubbers, preferably polybutadiene, polychloroprene, polyisoprene, olefin rubbers, preferably ethylene polymers, ethylene/vinyl acetate copolymers, ethylene/acrylate copolymers, EPDM rubbers, silicone rubbers or acrylate rubbers, preferably homo- or copolymers of alkyl acrylates containing up to 12 C atoms in the ester group, which for possible crosslinking may be copolymerized with polyfunctional unsaturated monomers, are used as the graft base.

7. Graft polymers as claimed in claims 1 to 6, characterized in that polybutadienes or butadiene copolymers having a particle size of 0.09 to 0.6 µm and gel contents of > 50% by weight or alkyl acrylate rubbers having particle sizes of 0.09 to 0.6 µm and gel contents of > 20% by weight are used as the graft base.

8. Thermoplastic moulding compounds containing
A. 65—97% by weight polyamide and
B. 3—35% by weight of a particulate graft polymer according to claims 1 to 7.

9. Thermoplastic moulding compounds as claimed in claim 8 containing
A. 70—95% by weight polyamide and
B. 5—30% by weight particulate graft polymers according to claims 1 — 7.

10. Thermoplastic moulding compounds as claimed in claim 8 containing
A. 75—80% by weight polyamide and
B. 20—25% by weight particulate graft polymers according to claims 1 — 7.

**Revendications**

1. Copolymères greffés, à une dimension de particule ($d_{50}$) de 0,05 à 8 µm, préparés à partir de

1) Un composant élastomère ayant une température de transition du second ordre inférieure à 0°C, qui sert de support de greffage et

2) des monomères greffés de formule I

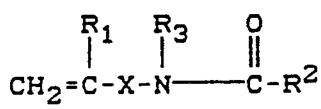

(I)

dans laquelle

$R_1$ représente H ou un groupe alkyle en $C_1$—$C_4$,

$R_3$ représente H, un groupe phényle ou alkyle en $C_1$—$C_8$,

$R_2$ représente H, un groupe alkyle en $C_1$—$C_{10}$, aryle en $C_6$—$C_{12}$ ou —$OR_4$ dans lequel

$R_4$ représente un groupe alkyle en $C_1$—$C_8$ ou aryle en $C_6$—$C_{12}$ qui peut éventuellement être substitué par des groupes alkyle ou par des groupes contenant de l'oxygène ou de l'azote,

X représente une liaison simple ou un groupe alkylène en $C_1$—$C_{10}$, arylène en $C_6$—$C_{12}$ ou

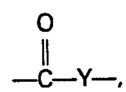, avec

Y = —O—Z—, —NH—Z— et

Z = alkylène en $C_1$—$C_{10}$ ou arylène en $C_6$—$C_{12}$, étant spécifié toutefois que le N-vinyl-N-méthylacétamide est exclu en tant que monomère greffé, et le cas échéant d'autres monomères à insaturation oléfinique.

2. Polymères greffés selon la revendication 1, caractérisés en ce qu'ils sont préparés à partir de
8 à 85% en poids du support de greffage 1 et
92 à 15% en poids des monomères à greffer consistant euxmêmes en
0,1 à 100% en poids de monomères de formule I et
0 à 99,9% en poids d'autres monomères à insaturation oléfinique.

3. Polymères greffés selon la revendication 1 ou 2, caractérisés en ce qu'ils ont été préparés par utilisation, en tant que monomères à greffer, de monomères de formule générale II

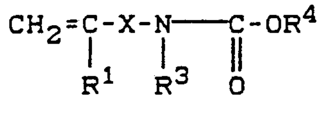

(II)

de N-vinyluréthannes (de formule II, X = liaison simple) ou de monomères de formule générale III

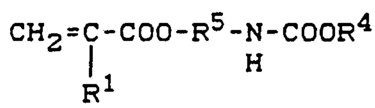

(III)

$R^1$, $R^3$ et $R^4$ ayant dans ces formules les significations indiquées dans la revendication 1 et $R^5$ représentant un groupe alkylène en $C_1$—$C_{10}$.

Polymères greffés selon les revendications 1 à 3, caractérisés en ce qu'ils ont été préparés à partir de 50 à 75% en poids du support de greffage 1 et 25 à 30% en poids des monomères à greffer, lesquels peuvent consister pour 99,5 ax 80% en poids en autres monomères à insaturation oléfinique.

5. Copolymères greffés selon les revendications 1 à 4, caractérisés en ce que, pour leur préparation, on a utilisé en tant qu'autres monomères à insaturation oléfinique des monomères vinyliques ou vinylidèniques, tout particulièrement le styrène, l'α-méthylstyrène, le p-méthylstyrène, des halogénostyrènes, des nitriles α,β-insaturés, de préférence l'acrylonitrile ou le méthacrylonitrile, des acrylates d'alkyle contenant jusqu'à 12 atoms de carbone dans le groupe ester ou encore les méthacrylates correspondants, l'acide méthacrylique, l'acide acrylique, l'acrylamide, le méthacrylamide, l'acétate de vinyle, le propionate de vinyle, des α-oléfines, de préférence l'ethylène, le propylène, le butadiène, le chloroprène, le chlorure de vinyle ou encore des dérivés de l'acide maléique, de préférence l'anhydrique maléique.

6. Copolymères greffés selon les revendications 1 à 5, caractérisés en ce que, pour leur préparation, on a utilisé en tant que supports de greffage des caoutchoucs diéniques, de préférence du polybutadiène, du polychloroprène, du polyisoprène, des caoutchoucs d'oléfines, de préférence des polymères de l'éthylène, des copolymères éthylène/acétate de vinyle, des copolymères éthylène/acrylate, des caoutchoucs EPDM, des caoutchoucs de silicones ou des caoutchoucs d'acrylates, de préférence des homo- ou co-polymères d'acrylates d'alkyle contenant jusqu'a 12 atomes de carbone dans le groupe ester, qui peuvent être copolymérisés, en vue d'une réticulation éventuelle, avec des monomères insaturés polyfonctionnels.

7. Polymères greffés selon les revendications 1 à 6, caractérisés en ce que, pour leur préparation, on a utilisé en tant que supports de greffage des polybutadiènes ou des copolymères du butadiène à une dimension de particule de 0,09 à 0,6 µm et à des teneurs en gel supérieures à 50% en poids ou des caoutchoucs d'acrylate d'alkyle à des dimensions de particules de 0,09 à 0,6 µm et des teneurs en gel supérieures à 20% en poids.

8. Matières à mouler thermoplastiques contenant

A. 65 à 97% en poids d'un polyamide et

B. 3 à 35% en poids d'un polymère greffé en particules selon les revendications 1 à 7.

9. Matières à mouler thermoplastiques selon la revendication 8, contenant

A. 70 à 95% en poids d'un polyamide et

B. 5 à 30% en poids de polymères greffé en particules selon les revendications 1 à 7.

10. Matières à mouler thermoplastiques selon la revendication 8, contenant

A. 75 à 80% en poids d'un polyamide et

B. 20 à 25% en poids de polymères greffés en particules selon les revendications 1 à 7.